Europäisches Patentamt

European Patent Office

Office européen des brevets

(11) Numéro de publication: **0 354 827**
**A1**

## DEMANDE DE BREVET EUROPEEN

(21) Numéro de dépôt: 89402123.7

(22) Date de dépôt: 26.07.89

(51) Int. Cl.⁵: **B 60 B 33/02**

(30) Priorité: 12.08.88 FR 8810861

(43) Date de publication de la demande:
14.02.90 Bulletin 90/07

(84) Etats contractants désignés:
AT BE CH DE ES GB GR IT LI LU NL SE

(71) Demandeur: ATELIERS REUNIS CADDIE
13, rue de la Mairie
F-67300 Schiltigheim (FR)

(72) Inventeur: Le Marchand, Alain
1, Rue de Vendée
F-67116 Reichstett (FR)

(74) Mandataire: Tony-Durand, Serge
Cabinet Tony-Durand 77, rue Boissière
F-75116 Paris (FR)

(54) **Roue pour chariot ou similaire comportant un dispositif de blocage sur un plan incliné.**

(57) Le dispositif de blocage prévu dans cette roue comprend deux mécanismes distincts comportant chacun une bille (10a) placée sur un chemin de guidage (11a) incliné par rapport à l'horizontale et pourvu d'une butée de retenue (19a) à son extrémité la plus basse. Les chemins de guidage de l'un et l'autre de ces mécanismes sont inclinés en sens inverse, de sorte que suivant le sens de l'inclinaison donnée au chariot correspondant, c'est la bille de l'un ou l'autre de ces mécanismes qui vient en position de blocage. Autour de chacun de ces chemins de guidage, il est prévu une couronne (8a) solidaire de la roue (1-2) et dont la paroi interne comporte une série de dents (21a) à profil incliné dans un sens et abrupt dans l'autre, de façon à assurer le blocage avec la bille (10a) du mécanisme correspondant dans le sens voulu pour interdire un déplacement de la roue vers le bas, sa rotation en sens inverse restant possible.

De telles roues peuvent être utilisées pour équiper des chariots susceptibles d'être placés sur des tapis roulants inclinés.

Fig: 1

**Description**

## Roue pour chariot ou similaire comportant un dispositif de blocage sur un plan incliné

La présente invention concerne les roues destinées à équiper des chariots de transport ou similaires, et plus particulièrement les roues comportant un dispositif apte à assurer automatiquement leur blocage lorsque le chariot correspondant est placé sur un plan incliné.

Les roues de ce genre sont destinées à équiper les chariots de transport utilisés par les clients d'un magasin à libre service comportant plusieurs étages reliés par des tapis roulants inclinés. Cependant ces roues sont aussi susceptibles d'équiper les chariots mis à la disposition des usagers dans des aéroports ou autres lieux publics comportant également plusieurs étages reliés par des tapis roulants inclinés. En effet, il convient d'assurer l'immobilisation de ces chariots lorsqu'ils sont placés sur un tel tapis incliné afin d'éviter qu'ils puissent se déplacer sous l'effet du poids de la charge transportée, ou même simplement de leur propre poids.

A cet effet, il a déjà été proposé un certain nombre de dispositifs de blocage dont le fonctionnement met à profit le fait que les tapis roulants de transport sont constitués par des bandes comportant des rainures parallèles s'étendant sur toute leur longueur. Ainsi, le brevet FR 1.362.308 décrit des roues pour chariots qui comportent des nervures saillantes destinées à pénétrer dans les rainures d'un tapis de transport et qui sont équipées par ailleurs d'un sabot de freinage apte à venir s'appliquer sur le dessus des nervures d'un tel tapis dans un tel cas. Le brevet FR 2.373.405 décrit pour sa part une roue constituée par deux disques indépendants susceptibles de pénétrer dans les rainures d'un tapis de transport et entre lesquelles il est prévu un sabot de freinage apte à s'appliquer dans un tel cas sur le dessus des nervures de ce même tapis. Les dispositifs de ce genre assurent donc l'immobilisation des roues correspondantes dès que les nervures ou disques saillants de ces roues se trouvent engagés dans les rainures d'un tapis de transport.

Cependant les dispositifs de ce genre ne donnent pas entière satisfaction, d'autant plus que leur bon fonctionnement nécessite que les caractéristiques de structure des rainures des tapis roulants soient exactement conformes aux spécifications prévues, ce qui n'est pas toujours le cas. Par ailleurs, les dispositifs de blocage de ce genre ont pour inconvénient de fonctionner même si le tapis de transport n'est pas incliné, puisque leur fonctionnement est déclenché simplement par le fait que les roues se trouvent placées sur un tapis rainuré. Or le fonctionnement de ce dispositif est inutile, et même gênant, lorsque le chariot correspondant est placé sur un tapis roulant non incliné. En effet dans un tel cas de nombreux usagers préféreraient pouvoir continuer à faire avancer les chariots sur le tapis de transport.

En dehors des dispositifs de freinage du type mentionné ci-dessus, il existe des dispositifs de blocage de roues fonctionnant sous le simple effet de l'inclinaison conférée au chariot équipé de telles roues. Ainsi, le brevet FR 1.600.143 décrit une roue pourvue d'un dispositif comportant deux billes de blocage montées sur deux chemins de guidage inclinés en sens inverse vers le haut et autour desquels il est prévu une couronne à denture intérieure solidaire de la roue. Quand le chariot est déplacé sur une surface plane, ces deux billes restent donc inactives. Cependant lorsque le chariot est placé sur une surface inclinée, ceci provoque l'inclinaison de l'un ou l'autre des deux chemins de guidage vers le bas. La bille placée sur celui-ci est donc amenée à se déplacer, sous l'effet de son propre poids, pour s'engager dans l'un des crans de la couronne dentée.

Par rapport aux dispositifs rappelés précédemment, un tel dispositif a pour avantage essentiel de fonctionner sous l'effet de l'inclinaison conférée au chariot correspondant, et non pas sous l'effet de la mise en place des roues sur un tapis rainuré. Ceci permet donc de s'affranchir des défauts de fonctionnement résultant des différences de dimensions des rainures d'un tapis de transport. De plus ce dispositif a pour avantage de ne pas provoquer un blocage des roues lorsque le chariot est placé sur un tapis de transport s'étendant à l'horizontale, donc lorsqu'un tel blocage est inutile et même intempestif. Enfin, ce dispositif a également pour avantage d'être en mesure d'assurer le blocage lorsque le chariot se trouve sur un plan incliné autre qu'un tapis de transport rainuré. Ceci permet du reste une sécurité accrue lors de l'utilisation des chariots dont les roues sont équipées d'un tel dispositif de blocage.

Cependant le dispositif décrit dans le FR 1.600.143 présente certains inconvénients. Ainsi, un tel dispositif assure, dans chaque sens d'inclinaison d'un chariot, le blocage de la roue correspondante dans les deux sens alors qu'il suffirait d'un blocage dans le sens de la descente. Du reste, ce blocage dans les deux sens est un inconvénient gênant car ceci exclut toute possibilité de déplacement du chariot en sens inverse s'il y a lieu. Cet inconvénient est particulièrement gênant au moment de l'arrivée du chariot à l'extrémité supérieure d'un tapis roulant incliné. En effet à ce moment il serait utile que l'usager puisse déplacer le chariot vers l'avant pour lui faire franchir le seuil de sortie. Par ailleurs, le dispositif décrit dans le FR 1.600.143 a pour autre inconvénient que, sous l'effet de trépidations, l'une ou l'autre des billes de blocage peut venir en position d'immobilisation de la roue correspondante et provoquer un blocage intempestif du chariot. Ceci provient du fait que les chemins de guidage de chaque bille de blocage présentent une longueur très limitée, compte tenu du fait que les deux chemins de guidage d'un tel dispositif de blocage sont prévus l'un à la suite de l'autre à l'intérieur d'une roue dont le diamètre est lui-même limité.

C'est pourquoi la présente invention a pour objet une roue pour chariot, équipée d'un dispositif de blocage du second type rappelé ci-dessus, mais qui est conçu de façon à éviter les inconvénients des dispositifs de ce genre existant jusqu'ici.

Cette roue, pour chariot ou similaire, comporte un dispositif apte à assurer son blocage lorsque ce chariot est placé sur un plan incliné, et ce au moyen d'un organe mobile de blocage pouvant se déplacer sur deux chemins de guidage, solidaires du support de la roue, et qui sont inclinés en sens inverse, cet organe de blocage étant susceptible de glisser, sous le simple effet de son propre poids, sur l'un ou sur l'autre de ces chemins de guidage, suivant le sens d'inclinaison du chariot, pour s'engager alors dans des crans prévus en regard le long de la périphérie de cette roue. Cependant, cette roue est caractérisée en ce que :
- les deux chemins inclinés de guidage appartiennent à deux mécanismes distincts comportant chacun un organe mobile de blocage, par exemple une bille, placé sur un chemin incliné de guidage pourvu d'une butée de retenue à son extrémité la plus basse,
- autour de chacun de ces chemins de guidage, il est prévu une couronne solidaire de la roue, ou faisant partie intégrante de celle-ci, et dont la paroi interne comporte une série de dents à profil incliné dans un sens et abrupt dans l'autre, de façon à assurer le blocage avec l'organe mobile du mécanisme correspondant dans le sens voulu pour interdire un déplacement de la roue vers le bas, sa rotation en sens inverse restant possible.

Ainsi, les inconvénients des dispositifs de blocage antérieurs de ce type se trouvent complètement éliminés. En effet, lorsque le dispositif de blocage est en action, la présente roue peut librement tourner dans le sens inverse à celui pour lequel est réalisé le blocage de cette roue. Ceci permet donc à l'utilisateur de déplacer un chariot dans le sens inverse à la descente, s'il y a lieu. Or cette liberté de déplacement est particulièrement utile à l'extrémité supérieure d'un tapis roulant incliné. Par ailleurs, du fait que les deux chemins inclinés de guidage sont distincts et peuvent ainsi s'étendre sur une grande longueur, il ne risque pas de se produire un blocage intempestif d'une telle roue, sous l'effet de chocs ou trépidations, alors qu'elle roule normalement sur une surface horizontale.

Dans une forme de réalisation avantageuse de la présente roue, les deux mécanismes du dispositif de blocage sont disposés de part et d'autre du voile de la roue correspondante et les couronnes à dentures intérieures de ces deux mécanismes sont rapportées contre l'une et l'autre faces de ce flasque.

Selon une autre caractéristique, le chemin de guidage de l'organe mobile de blocage de chacun de ces mécanismes est constitué par un alésage prévu à l'intérieur d'une pièce servant de support à l'organe de blocage correspondant et qui est solidarisée avec la joue respective de la chape de montage de la roue correspondante.

Cependant d'autres particularités et avantages de la roue selon l'invention et de son dispositif de blocage apparaitront au cours de la description. Celle-ci est donnée en référence au dessin annexé à titre indicatif, et sur lequel :

Les figures 1 et 2 sont des vues en élévation avec arrachement, de l'un et l'autre côtés d'une roue selon l'invention.

La figure 3 est une vue en coupe transversale de cette roue selon les lignes III-III des figures 1 et 2, et sur laquelle un seul des mécanismes de blocage est représenté de façon complète.

La figure 4 est une vue en perspective des pièces servant de supports aux organes mobiles de blocage des deux mécanismes prévus dans cette roue.

La figure 5 est une vue similaire à la figure 1 mais illustrant le fonctionnement de l'un de ces mécanismes lorsque la roue correspondante est placée sur un tapis de transport incliné se déplaçant vers le haut.

La figure 6 est une vue similaire à la figure 2 illustrant le fonctionnement de l'autre mécanisme de blocage quand cette même roue est disposée sur un tapis de transport se déplaçant vers le bas.

La figure 7 est une vue partielle similaire à la figure 1, mais qui représente une autre forme de réalisation des mécanismes de blocage.

La figure 8 est une vue en coupe d'un détail, selon la ligne VIII-VIII de la figure 7.

Le corps de la roue représenté comporte une bande de roulement 1 de forme cylindrique s'étendant autour d'un voile vertical 2 dont elle est solidaire. La largeur de cette bande de roulement est nettement plus importante que l'épaisseur de ce voile qui est situé dans le plan médian de celle-ci. Ceci ménage donc deux cavités disposées de part et d'autre du voile 2. Le moyeu de cette roue est monté librement rotatif autour d'un axe horizontal 3 s'étendant entre les deux joues 4 d'une chape de montage 5 servant de support à cette roue.

Cette chape porte une coiffe 6 dont l'axe X-X' est normalement disposé à la verticale. Cette coiffe porte une patte 7 ou tout autre organe de fixation permettant son montage sur un chariot ou similaire. Il s'agit donc d'une roue du type dit "non-orientable".

Le dispositif de blocage équipant cette roue comprend deux mécanismes distincts disposés de part et d'autre du voile 2 de celle-ci. Chacun de ces mécanismes comporte une couronne cylindrique 8a ou 8b présentant, sur sa paroi intérieure, une série de dents dont les particularités seront décrites par la suite. Ces deux couronnes sont disposées de part et d'autre du voile 2 à l'intérieur des cavités délimitées par la bande de roulement 1. Du reste, la paroi externe de chacune de ces couronnes est appliquée contre la paroi interne de cette bande de roulement. Les deux couronnes 8a, 8b sont solidarisées en rotation avec le voile 2 de la roue par l'intermédiaire de tétons 9 portés par ces couronnes et qui sont engagés dans des trous correspondants de ce voile.

A l'intérieur de l'espace délimité par chacune de ces couronnes 8a ou 8b, est disposé l'organe mobile de blocage du mécanisme correspondant. Celui-ci consiste en une bille, respectivement 10a, 10b, qui est montée mobile dans un chemin de guidage constitué par un alésage 11a ou 11b pratiqué dans une pièce 12a ou 12b servant ainsi de support à la bille correspondante.

Ces deux pièces sont disposées de part et d'autre du voile 2 de la roue sans être solidarisées en rotation avec celle-ci. Au contraire, ces deux pièces sont solidarisées avec les joues 4 de la chape 5 de montage. Chacune de ces pièces 12a ou 12b est rapportée sur l'axe horizontal 3 de la roue et sa solidarisation avec les joues de la chappe 5 est assurée par une goupille 13 engagée à la fois dans un alésage 14 de l'une et l'autre de ces deux pièces et dans une encoche correspondante 15 des deux joues 4 de la chape.

Par ailleurs les deux pièces 12a et 12b portent chacune un collet 16 faisant saillie du côté interne. Les deux collets ainsi prévus sont disposés bout à bout autour de l'axe 4 et leurs extrémités sont accouplées l'une à l'autre par l'intermédiaire de découpes complémentaires. Autour de ces deux collets 16 il est disposé un roulement 17 engagé à l'intérieur de l'ouverture centrale prévue dans le voile 2 de la roue. Ainsi, cette dernière tourne autour de l'axe horizontal 3 par l'intermédiaire de ce roulement.

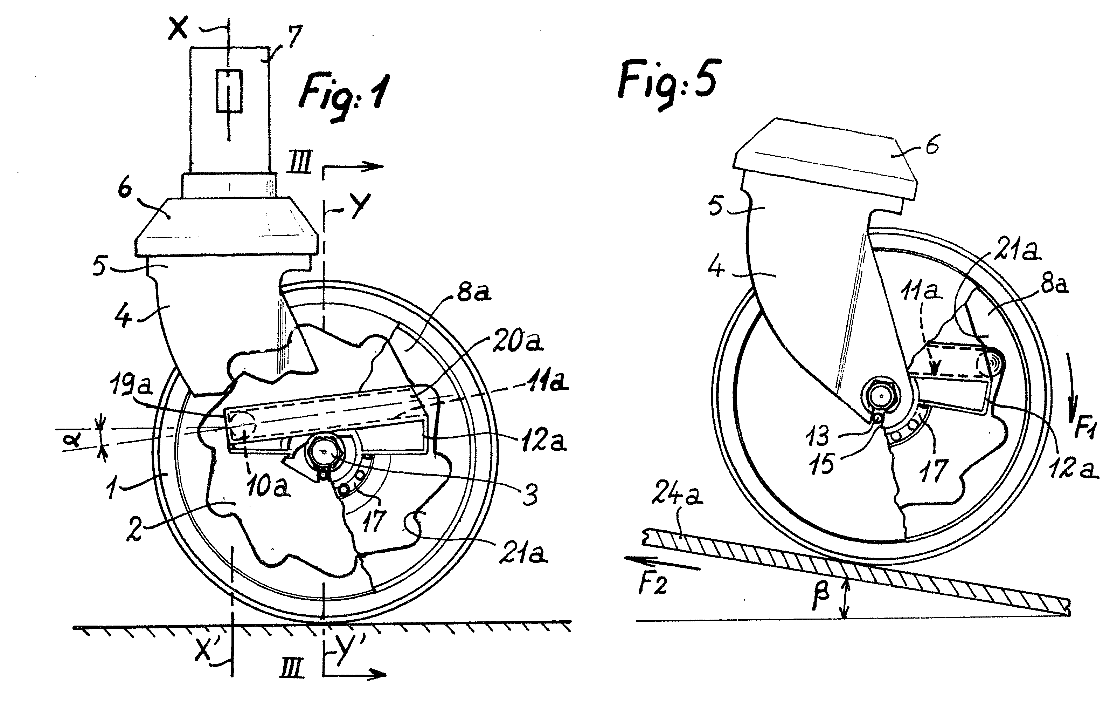

Lorsque ces deux pièces 12a et 12b sont fixées en place, les chemins de guidage 11a et 11b, prévus dans celle-ci, sont inclinés par rapport à l'horizontale selon un angle $\alpha$, si la roue est elle-même disposée sur un plan horizontal. Cependant comme on peut le constater par une comparaison des figures 1 et 2, le sens d'inclinaison des deux chemins de guidage 11a et 11b est inverse. Ainsi, si l'on considère que la patte de fixation 7 est située à l'avant :
- l'extrémité arrière du chemin de guidage 11a, situé sur le côté gauche, est située à un niveau supérieur à celui de l'extrémité avant de ce même chemin de guidage,
- alors que ceci est l'inverse pour le chemin de guidage 11b situé du côté droit de cette même roue.

De plus dans l'un et l'autre de ces chemins de guidage, l'extrémité la plus basse 19a ou 19b est fermée de sorte que la bille ne peut pas s'échapper de ce côté. Par contre, l'extrémité la plus haute 20a ou 20b est librement ouverte pour permettre la sortie de la bille correspondante 10a ou 10b en position de blocage lors du fonctionnement du mécanisme correspondant.

Lorsque le support de la roue est dans sa position normale et que son axe X-X' s'étend verticalement, l'angle d'inclinaison $\alpha$ de chacun des chemins de guidage 11a ou 11b par rapport à l'horizontale est de 7° dans l'exemple représenté. Ceci permet le déclenchement de l'un ou l'autre mécanisme de blocage pour une inclinaison du support de la roue, supérieure à 7° dans un sens ou dans l'autre. Cependant l'angle $\alpha$ pourrait avoir une valeur différente comprise entre 5° et 10°.

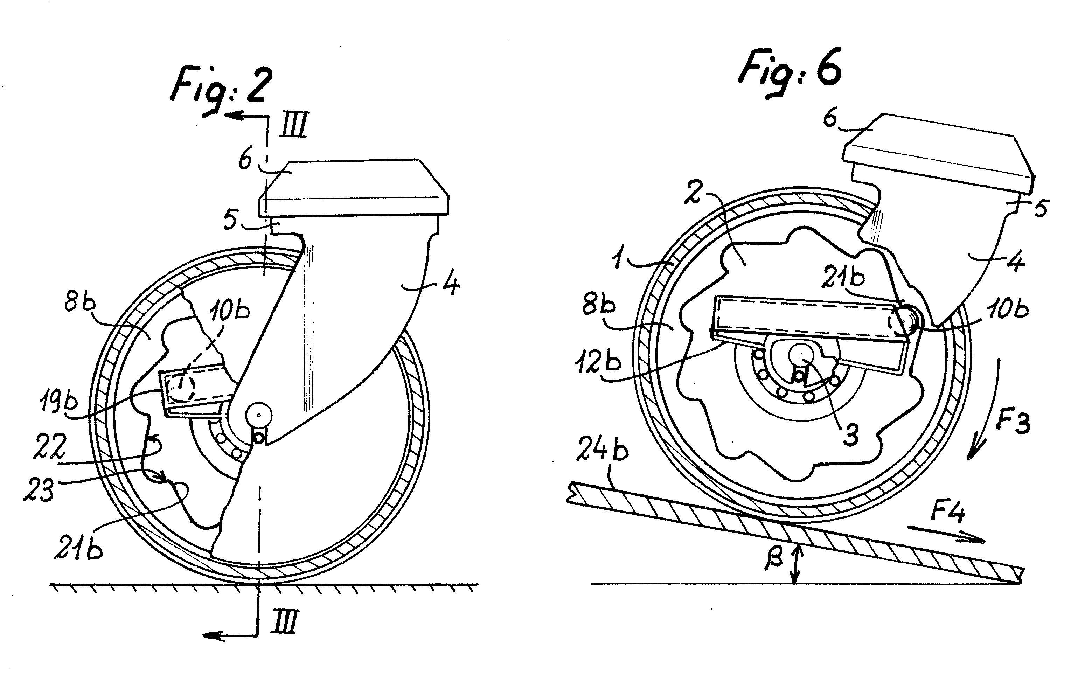

Comme déjà indiqué, la paroi interne de chaque couronne 8a ou 8b comporte une série de dents de profil particulier. En l'occurrence, chacune de ces dents 21a ou 21b présente un profil incliné 22 d'un côté et un profil abrupt 23 du côté opposé. Ainsi, chaque couronne 8a ou 8b est susceptible de jouer la fonction d'une roue à rochet comportant une denture intérieure. L'orientation de ces dents est telle que lorsque la bille 10a ou 10b de l'un ou l'autre mécanisme de blocage se trouve placée dans le creux existant entre deux dents (figures 6 et 7), ceci empêche la rotation de la couronne correspondante 8a ou 8b dans le sens horaire, tout en permettant cependant sa libre rotation dans le sens inverse. En effet, les parties inclinées des dents 21a ou 21b jouent alors le rôle de rampes repoussant la bille correspondante dans son chemin de guidage.

En conséquence, le fonctionnement du présent dispositif est le suivant :

### 1° - Disposition du chariot correspondant sur un tapis incliné ascendant (voir figure 5) :

Si le chariot correspondant est placé sur un tel tapis incliné ascendant 24a, la roue décrite précédemment prend la position représentée sur la figure 5, pour autant que l'angle d'inclinaison $\beta$ de ce tapis soit supérieur à l'angle $\alpha$ mentionné précédemment. Le chemin de guidage 11a se trouve alors légèrement incliné vers le bas et vers l'arrière de sorte que, sous le simple effet de son propre poids, la bille 10a du mécanisme de blocage correspondant, situé sur le côté gauche de la roue, est amenée à se déplacer et à sortir hors de son support 12a. Compte tenu que la roue est encore en mouvement lorsque le chariot est placé sur le tapis 24a, cette bille s'engage dans le premier cran de la couronne 8a qui vient se présenter en regard. Compte tenu que cette bille reste partiellement engagée à l'intérieur de l'alésage de guidage 11a, elle forme alors une butée de blocage pour la dent 21a située immédiatement après.

De ce fait, la roue se trouve empêchée de tourner dans le sens F1, ce qui interdit tout recul du chariot correspondant vers le bas. Ceci assure donc l'immobilisation du chariot sur le tapis 24a qui se déplace vers le haut selon la flèche F2.

Cependant du fait de la forme particulière des dents 21a, la roue correspondante n'est pas bloquée dans le sens inverse à la flèche F1. Eventuellement il est donc possible à l'usager de pousser le chariot vers le haut en cas de besoin. Par ailleurs, cette possibilité de déplacement facilite le dégagement du chariot hors du tapis 24a à l'extrémité supérieure de celui-ci.

Il convient de noter que lors du fonctionnement du mécanisme de blocage situé du côté gauche de la roue, tel que décrit ci-dessus, le mécanisme identique prévu sur le côté opposé est resté totalement inactif. En effet l'inclinaison conférée à la roue dans un tel cas a eu pour seul effet de relever encore plus le chemin de guidage 11b de la bille correspondante 10b, de sorte que cette dernière se trouve maintenue contre le fond 19b de celui-ci.

### 2° - Disposition du chariot correspondant sur un tapis incliné descendant (figure 6) :

Si le chariot correspondant est placé sur un tel tapis incliné descendant 24b, la roue décrite précédemment prend la position représentée sur la figure 6, pour autant que l'angle d'inclinaison $\beta$ de ce tapis soit supérieur à l'angle $\alpha$ mentionné précédemment. Le chemin de guidage 11b se trouve alors légèrement incliné vers le bas et vers l'arrière de sorte que la bille 10b du mécanisme de blocage correspondant, situé sur le côté droit de la roue, est amenée à sortir partiellement hors de son support 12b.

Compte tenu que la roue est encore en mouvement lorsque le chariot est amené sur le tapis 24b, cette bille s'engage dans le premier cran de la couronne 8b qui vient se présenter en regard. Elle forme donc une butée de blocage pour la dent 21b située immédiatement après.

De ce fait, la roue se trouve empêchée de tourner dans le sens F3, ce qui interdit tout avancement du chariot correspondant vers le bas. Ceci assure donc l'immobilisation du chariot sur le tapis 24b qui se déplace vers le bas selon la flèche F4.

Cependant du fait de la forme particulière des dents 21b, la roue correspondante n'est pas bloquée dans le sens inverse à la flèche F3. Eventuellement il est donc possible à l'usager de tirer vers lui, et vers le haut, le chariot en cas de besoin. Par ailleurs, cette possibilité de déplacement facilite le dégagement du chariot hors du tapis 24b à l'extrémité inférieure de celui-ci si les roues se trouvent trop fortement bloquées. En effet cette manoeuvre de recul permet de débloquer la bille 10b du mécanisme correspondant de chaque roue, de sorte que le chariot peut à nouveau rouler librement sur le sol horizontal après dégagement hors du tapis 24b.

Il convient de noter que lors du fonctionnement du mécanisme de blocage situé du côté droit de la roue, tel que décrit ci-dessus, le mécanisme identique prévu sur le côté opposé est resté totalement inactif. En effet l'inclinaison conférée à la roue dans un tel cas a eu pour seul effet de relever encore plus le chemin de guidage 11a de la bille correspondante 10a, de sorte que cette dernière se trouve maintenue contre le fond 19a de celui-ci.

### 3° - Blocage sur un plan incliné statique :

Lorsqu'au lieu d'être disposé sur un tapis mobile incliné, le chariot est placé sur un plan incliné fixe, l'un ou l'autre des mécanismes de blocage est amené à fonctionner suivant que ce plan est incliné vers le bas ou vers le haut.

Ceci évite donc le danger d'un déplacement intempestif du chariot dans un tel cas.

Du reste les roues selon l'invention peuvent être utilisées pour interdire la sortie de chariots en dehors d'un lieu déterminé. En effet, il suffit de prévoir, à la sortie de celui-ci, une rampe statique suffisamment inclinée pour provoquer le blocage automatique des roues des chariots. Du reste ceci constitue également une application très utile des roues à blocage automatique selon l'invention.

### 4° - Suppression de tout risque de blocage intempestif :

Le dispositif selon l'invention est exempt d'un risque de blocage intempestif, tel qu'il existait avec le mécanisme décrit dans le FR 1.600.143. En effet, ainsi qu'il a déjà été indiqué, dans ce précédent mécanisme il pouvait se produire des blocages intempestifs dûs aux trépidations subies par la roue ou au passage de celle-ci sur des irrégularités du sol, et ce alors que le chariot était déplacé sur une surface horizontale. Ceci était dû au fait que chacune des branches inclinées du chemin de guidage des roues de blocage présentait obligatoirement une longueur très faible.

Or cet inconvénient est radicalement supprimé dans le cas présent. En effet le chemin de guidage 11a ou 11b de chaque mécanisme de blocage s'étend sur une grande longueur correspondant approximativement au diamètre de la roue, moins la largeur de la couronne correspondante 8a ou 8b. En conséquence des trépidations, ou le simple passage sur une irrégularité du sol, ne suffisent pas à provoquer la sortie de l'une ou l'autre bille de blocage en dehors de son chemin de guidage.

### 5° - Cas d'une roue dite "orientable" :

Dans le cas où, au lieu d'une roue non-orientable, il s'agit d'une roue orientable, c'est-à-dire d'une roue susceptible de pivoter sur elle-même autour de l'axe X-X' de la coiffe 6 de montage, le fonctionnement du dispositif de blocage est le même que celui décrit précédemment si cette roue ne change pas d'orientation lors de sa mise en place sur un tapis transporteur incliné. Cependant, si cette roue s'oriente en sens inverse à ce moment, ceci ne présente aucun inconvénient. En effet, la seule conséquence, qui peut en résulter, est que c'est le même mécanisme de blocage qui sera amené à fonctionner à la montée et à la descente.

Du reste, dans le cas d'une roue de type orientable, celle-ci peut fort bien être équipée d'un seul mécanisme de blocage dans lequel le chemin de guidage de l'organe mobile de blocage est incliné dans le sens voulu, c'est-à-dire dans le sens prévu pour le chemin de guidage 11a du support 12a représenté aux Figs. 1 et 5. En effet sur un tapis incliné ascendant le blocage se produit comme illustré à la Fig. 5 et sur un tapis descendant il en est de même, car il s'y produit au préalable un retournement de la roue sur elle même lors de sa mise en place sur ce tapis.

### 6° - Efficacité du blocage :

Il convient de noter que pour un fonctionnement efficace de l'un ou l'autre des deux mécanismes de blocage, il est nécessaire que l'extrémité ouverte 20a ou 20b de chaque chemin de guidage se termine à proximité immédiate du cercle inscrit à l'intérieur des dents 21a ou 21b des deux couronnes 8a et 8b. Par ailleurs, il est également nécessaire que dans sa position saillante de blocage chaque dent 10a ou 10b reste encore partiellement engagée dans le chemin de guidage correspondant 11a ou 11b de façon à être en mesure de constituer une butée fixe assurant le blocage de la couronne correspondante 8a ou 8b. A cet effet, l'extrémité ouverte 20a ou 20b de chaque chemin de guidage 11a ou 11b présente une forme en biseau, ainsi qu'il apparait clairement sur les dessins.

Cependant le profil des dents 21a et 21b des deux couronnes 8a et 8b pourrait être différent de celui représenté, pour autant que ces couronnes soient aptes à jouer le rôle de roues à rochet en combinaison avec l'une ou l'autre bille de blocage.

Du reste il est bien évident que la roue selon l'invention n'est pas limitée à l'exemple décrit ci-dessus. Ainsi, la structure de cette roue pourrait être différente, les deux couronnes 8a et 8b faisant éventuellement partie intégrante du corps de cette roue au lieu d'être rapportées de part et d'autre du voile de celle-ci. Par ailleurs les billes de blocage 10a et 10b pourraient être remplacées par d'autres organes mobiles de blocage appropriés, par exemple des tiges de blocage montées coulissantes à l'intérieur des alésages 11a et 11b.

Les figures 7 et 8 illustrent du reste une telle variante de réalisation d'un mécanisme de blocage. Dans celle-ci l'organe mobile de blocage consiste en une tige coulissante 10c dont une extrémité est susceptible de s'engager entre les dents de la couronne correspondante 8a, cette dernière étant identique à celle prévue dans les mécanismes décrits précédemment. Le support de guidage de cette tige 10c est alors constitué par un collier 12c rapporté contre la face interne de la joue correspondante et de la chape 5 de la roue (voir fig. 8). Bien entendu ce collier est convenablement incliné pour que le blocage de la roue se produise dans les mêmes conditions que précédemment, c'est-à-dire par déplacement de la tige 10c sous l'effet de son propre poids quand le chariot correspondant subit une inclinaison déterminée. Des circlips 26 ou autres organes rapportés sur la tige coulissante 10c assurent la limitation voulue de ses déplacements.

Au lieu de consister en un collier unique 12c, le support de la tige coulissante 10c pourrait être constitué par deux anneaux écartés l'un de l'autre. Par ailleurs une telle tige coulissante peut être de section de forme autre que circulaire, la forme de son ou ses supports de guidage étant modifiée en conséquence. Dans le cas où les organes de blocage sont constitués par des billes les chemins de guidage de celles-ci peuvent fort bien ne pas être rectilignes pour autant que l'une de leurs extrémités, soit plus haute que l'autre.

Comme déjà indiqué, les roues selon l'invention sont destinées à équiper des chariots de transport tels que ceux utilisés par les clients d'un magasin à libre service comportant différents niveaux reliés par des tapis roulants inclinés. Pour la même raison ces roues peuvent également équiper les chariots mis à la disposition des usagers dans des gares, aéroports, etc... présentant plusieurs niveaux reliés par des tapis roulants inclinés. Cependant ces roues peuvent aussi équiper toutes autres sortes de chariots devant être placés sur des tapis roulants inclinés ou similaires.

## Revendications

1. Roue pour chariot ou similaire, comportant un dispositif apte à assurer son blocage lorsque ce chariot est placé sur un plan incliné, et ce au moyen d'un organe mobile de blocage pouvant se déplacer sur deux chemins de guidage, solidaires du support de la roue, et qui sont inclinés en sens inverse, cet organe de blocage étant susceptible de glisser, sous le simple effet de son propre poids, sur l'un ou sur l'autre de ces chemins de guidage, suivant le sens d'inclinaison du chariot, pour s'engager alors dans des crans prévus en regard le long de la périphérie de cette roue, caractérisée en ce que :

- les deux chemins inclinés de guidage (11a, 11b) appartiennent à deux mécanismes distincts comportant chacun un organe mobile de blocage, par exemple une bille (10a, 10b), placé sur un chemin incliné de guidage (11a, 11b) pourvu d'une butée de retenue (19a, 19b) à son extrémité la plus basse,

- autour de chacun de ces chemins de guidage (11a, 11b), il est prévu une couronne (8a, 8b) solidaire de la roue (1-2), ou faisant partie intégrante de celle-ci, et dont la paroi interne comporte une série de dents (21a, 21b) à profil incliné dans un sens et abrupt dans l'autre, de façon à assurer le blocage avec l'organe mobile (10a, 10b) du mécanisme correspondant dans le sens voulu pour interdire un déplacement de la roue vers le bas, sa rotation en sens inverse restant possible.

2. Roue selon la revendication 1, caractérisée en ce que les deux mécanismes de blocage sont disposés de part et d'autre du voile de cette roue et les couronnes (8a, 8b) de ces deux mécanismes sont rapportées contre l'une et l'autre faces du voile (2) de celle-ci.

3. Roue suivant la revendication 1 ou 2, caractérisée en ce que le chemin de guidage (11a, 11b) de l'organe mobile de blocage (10a, 10b) de chaque mécanisme étant constitué par un alésage prévu dans une pièce (12a, 12b) destiné à servir de support à cet organe, cet alésage est fermé à son extrémité la plus basse (19a, 19b) de façon à comporter à cet endroit une butée de retenue pour l'organe de blocage correspondant, alors que son extrémité opposée est librement ouverte pour permettre la sortie de cet organe en position de blocage.

4. Roue suivant la revendication 1 ou 2, caractérisée en ce que l'organe mobile de blocage, prévu dans chaque mécanisme de blocage consiste en une tige (10c) et le support de guidage de celle-ci est constitué par un collier (12c) à l'intérieur duquel peut coulisser cette tige, ou bien deux anneaux convenablement alignés.

5. Roue selon l'une des revendications précédentes, caractérisée en ce que celle-ci étant de type dit "orientable", c'est-à-dire susceptible de pivoter sur elle-même autour de l'axe de la pièce de montage, le dispositif de blocage comporte un seul mécanisme dans lequel l'inclinaison du chemin de guidage de l'organe mobile de blocage est telle que le blocage se produit lorsque le support de cette roue se trouve incliné vers le bas.

X

7

*Fig:1*

III

Y

6

5

4

8a

19a

20a

11a

α

12a

1

10a

3

2

17

21a

X'

III

Y'

*Fig:5*

6

5

4

21a

11a

8a

13

15

17

12a

24a

F1

F2

β

EP 0 354 827 A1

## Fig: 2

III

6
5
8b
10b
19b
22
23
21b
4
III

## Fig: 6

2
1
8b
12b
21b
6
5
4
10b
3
F3
F4
24b
β

EP 0 354 827 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 623 575 (SCHILTIGHEIM) * Colonne 2, ligne 15 - colonne 3, ligne 25; figures 1-5 * & FR-A-1 600 143 (Cat. D) * | 1,3 | B 60 B 33/02 |
| A | US-A-4 629 036 (CHOY) * Colonne 2, ligne 18 - colonne 3, ligne 10; figures 1-6 * | 1,4 | |
| A | DE-A-2 050 105 (SCHULTE) * Page 7, ligne 1 - page 8, ligne 3; figure 1 * | 1 | |
| A | FR-A-2 142 560 (KUGELFABRIK SCHULTE) * Page 7, ligne 21 - page 9, ligne 20; figures 9-34 * | 1 | |
| A | CH-A- 273 314 (AEBI) * Page 2, lignes 6-15,39-92; figures 1-4 * | 1 | |
| A | FR-A-1 590 648 (ATELIERS REUNIES) * Page 3, ligne 41 - page 5, ligne 8; figures 4-6 * | 1 | DOMAINES TECHNIQUES RECHERCHES (Int. Cl.5) B 60 B B 62 B |
| A | WO-A-8 402 688 (KART GUARD) * Page 10, lignes 4-35, figures 3,5 * | 1 | |

Le présent rapport a été établi pour toutes les revendications

| Lieu de la recherche | Date d'achèvement de la recherche | Examinateur |
|---|---|---|
| LA HAYE | 07-11-1989 | AYITER I. |